Europäisches Patentamt

(19) European Patent Office

Office européen des brevets

(11) Publication number: **O 021 522**
**B1**

(12) **EUROPEAN PATENT SPECIFICATION**

(45) Date of publication of patent specification: **19.01.83**

(51) Int. Cl.³: **H 01 G 1/11**

(21) Application number: **80200566.0**

(22) Date of filing: **17.06.80**

---

(54) **Explosionproof capacitor.**

---

(30) Priority: **22.06.79 US 51082**
**02.07.79 US 54342**

(43) Date of publication of application:
**07.01.81 Bulletin 81/1**

(45) Publication of the grant of the patent:
**19.01.83 Bulletin 83/3**

(84) Designated Contracting States:
**AT DE FR GB IT**

(56) References cited:
**DE - C - 966 847**
**FR - A - 2 330 151**
**FR - A - 2 379 894**
**US - A - 3 878 440**

(73) Proprietor: **North American Philips Corporation**
**100 East 42nd Street 9th Floor**
**New York, N.Y. 10017 (US)**

(72) Inventor: **Deutsch, E.**
**c/o Int. Octrooibureau B.V. Prof. Holstlaan 6**
**NL-5656 AA Eindhoven (NL)**
Inventor: **Carino, J.W.**
**c/o Int. Octrooibureau B.V. Prof. Holstlaan 6**
**NL-5656 AA Eindhoven (NL)**

(74) Representative: **Cuppens, Hubertus Martinus Maria et al,**
**INTERNATIONAAL OCTROOIBUREAU B.V. Prof. Holstlaan 6**
**NL-5656 AA Eindhoven (NL)**

---

Courier Press, Leamington Spa, England.

Explosionproof capacitor

The invention relates to a capacitor, comprising a capacitor element which is accommodated in a can-shaped housing which is closed by a lid, the bottom of the can-shaped housing comprising a weakened portion in the form of two identical zones having a wall thickness which is smaller than the wall thickness of the part of the bottom which surrounds these two zones.

In a known capacitor of the described kind (United States Patent Specification No. 3,878,440), the weakened portion consists of four zones having a wall thickness which is smaller than the wall thickness of the bottom surrounding these zones. These four zones together form a flower-like pattern with boundaries which are radially directed towards the centre of the circular bottom.

Because all boundaries of the four zones meet in the centre of the bottom of the housing, the bottom is not only vulnerable but also unsuitable for accommodating an external connection.

The invention has for its object to provide a capacitor in which the said drawbacks are mitigated.

To this end, a capacitor in accordance with the invention is characterized in that the two zones are separated by a ridge having a wall thickness which is larger than the wall thickness of the two zones.

The ridge present between the two weakened portions on the one hand prevents the bottom of the housing from becoming vulnerable, whilst on the other hand an external connection can be accommodated on the rigid ridge when a capacitor comprising so-called axial connections is desired.

A special embodiment of a capacitor according to the invention, in which wear of the tool used for forming the weakened portions has only a comparatively small effect on the so-called opening pressure, is characterized in that the two zones are bounded at their circumference by troughs whose bottoms have a wall thickness which is smaller than the wall thickness of the two zones.

The invention will be described in detail hereinafter with reference to the accompanying diagrammatic drawings.

Figure 1 is partly a side elevation and partly a longitudinal sectional view of a first embodiment of a capacitor in accordance with the invention,

Figure 2 is a sectional view taken along the line II—II in Figure 1,

Figure 3 is a sectional view taken along the line III—III in Figure 1,

Figure 4 is a longitudinal sectional view of the lower part of the capacitor shown in Figure 1, after the opening pressure has been exceeded,

Figure 5 is partly a side elevation and partly a longitudinal sectional view of a second embodiment of a capacitor in accordance with the invention,

Figure 6 is a sectional view taken along the line VI—VI in Figure 5,

Figure 7 is a sectional view, taken along the line VII—VII in Figure 6, at an increased scale,

Figure 8 shows a detail at an increased scale of the part of the capacitor in Figure 7 which is denoted by the reference VIII,

Figure 9 is a sectional view of a third embodiment of a capacitor in accordance with the invention, and

Figure 10 shows a detail at an increased scale of the part of the capacitor shown in Figure 9 which is denoted by the reference X.

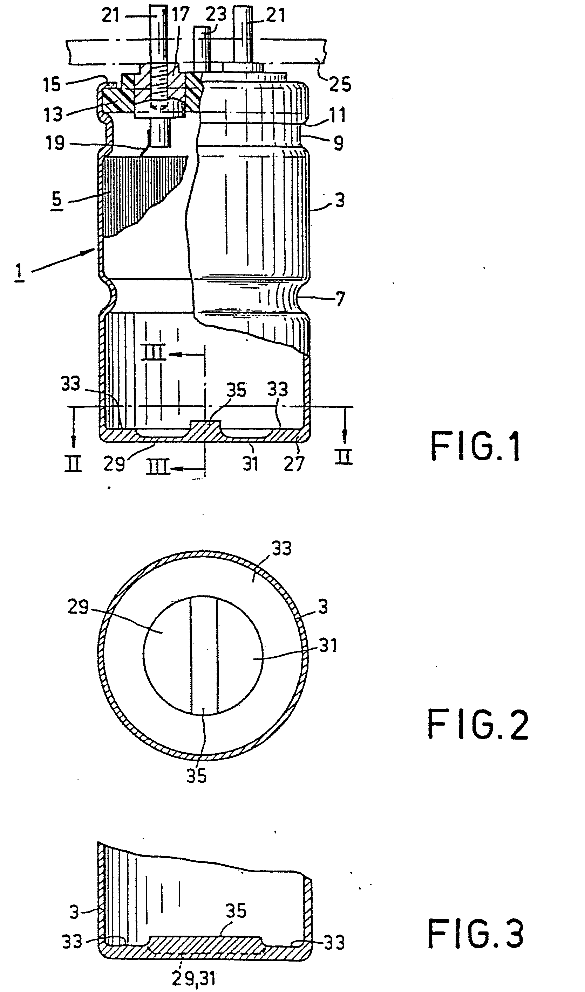

The capacitor 1 in Figure 1 comprises a cylindrical (can-shaped) housing 3 which is made by impact extrusion and which accommodates a capacitor element 5. The capacitor element 5 consists of a known roll of successively a formed aluminium foil (anode foil), a first separator foil, an etched aluminium foil (cathode foil), and a second separator foil. The first separator foil is impregnated with an electrolyte such as, for example, dimethyl acetamide, dimethyl formamide or glycol. Thus, the capacitor 1 is an electrolytic capacitor in the present case. The capacitor element 5 is positioned in the housing 3 by means of a first circumferential rill 7. In the wall of the housing 3 there is provided a second circumferential rill 9, so that a rim 11 is formed. The rim 11 supports a lid 13 of an electrically insulating material. The lid 13 is clamped by the beading of the upper edge 15 of the housing 3.

In the lid 13 there are provided two metal passages (only one passage 17 is visible in Figure 1) for the connection of the internal connections 19 on the capacitor element to external connections 21. One of the external connections is the cathode connection and the other connection is the anode connection. The lid 13 also accommodates a locater pin 23 in order to prevent reversing of the polarity when the capacitor is mounted on a printed circuit board 25.

In the bottom 27 of the housing 3 there is provided a weakened portion in the form of two identical zones 29 and 31 which have a wall thickness which is smaller than that of the part 33 of the bottom 27 which surrounds these two zones 29 and 31. The zones 29 and 31 are separated by a ridge 35 which has a wall thickness which is larger than the wall thickness of the zones 29 and 31, and even larger than the wall thickness of the part 33 of the bottom 27 (see also the Figures 2 and 3). The zones 29 and 31 and the ridge 35 are preferably proportioned so that together they cover a circular area, the ridge extending according to a diameter of the circular area.

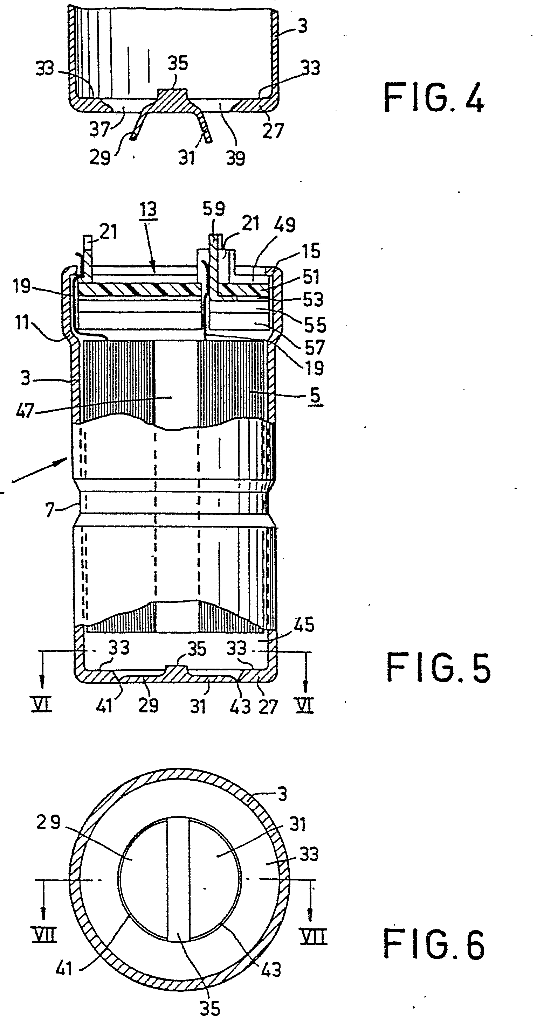

As soon as gas is developed in the capacitor, for example, due to evaporation of the electrolyte, and a given threshold value of the gas pressure (opening pressure) is exceeded, the two zones 29 and 31 are partly torn loose from the bottom 27. Tearing takes place along the part of the bottom that the zones 29 and 31 and the part 33 have in common. The zones 29 and 31 behave as flaps which pivot around the boundary lines which they have in common with the ridge 35 (see Figure 4). Thus, outlet apertures 37 and 39 for the gas in the capacitor are formed. An explosionproof capacitor is thus obtained. It is to be noted that the ridge 35 has a number of functions. For example, the ridge 35 prevents the bottom 27, being weakened in the zones 29 and 31, from becoming too vulnerable, for example, for transport. Furthermore, the ridge 35 serves as a kind of hinge for the zones 29 and 31. Finally, internal and external connections can be mounted on the ridge 35 when a capacitor comprising so-called axial connections on both sides of the housing 3 is desired. The weakened portions 29 and 31 are preferably formed during the manufacture of the housing 3 by means of the same impact extrusion tool as used for forming the housing 3 from a disc of aluminium. Thus, no additional step for making the weakened portions 29 and 31 is required.

In the special embodiment of a capacitor in accordance with the invention which is shown in Figures 5 to 8, the two weakened portions 29 and 31 are adjoined over a part of their circumference by troughs or recesses 41 and 43. The troughs 41 and 43 are situated along the part of the weakened portions 29 and 31 which adjoins the part 33 of the bottom 27. It is noted that, whenever possible, the Figures 5 to 10 comprise reference numerals which correspond to those of the Figures 1 to 4. The troughs 41 and 43, therefore, are not situated in the boundary zone of the weakened portions 29 and 31 and the ridge 35. The advantage of the troughs 41 and 43 consists in that wear of the impact extrusion tool has only a comparatively small effect on the opening pressure. The action of the weakened portions in the capacitor shown in Figure 5 is in principle identical to that of the weakened portions of the capacitor shown in Figure 1 (see also Figure 4). The dimensions of the housing 3 and the capacitor element 5 are chosen such that an expansion space 45 is formed underneath the capacitor element 5 (Fig. 5). A central expansion space 47 can be obtained by using a comparatively thick winding mandril during the winding of the capacitor element 5. As a result of the expansion spaces 45 and 47 the capacitor shown in Figure 5 permits a comparatively greater development of gas than the capacitor shown in Figure 1. The freedom of design is thus also increased.

It is to be noted that the lid 13 of the capacitor shown in Figure 5 has a laminar construction. Proceeding from the top downwards, the lid 13 is successively composed of a metal ring 49 on which external connections 21 are formed (cathode connections), a disc 51 of a hard type of phenolic resin, a disc 53 of a comparatively hard type of rubber, a disc 55 of a comparatively soft type of rubber (for example, Buna rubber) and finally a disc 57 of polypropylene. Between the discs 51 and 55 an external connection 59 (anode connection) is secured in a recess in the disc 53. The right external connection 21 (cathode connection) in Figure 5 is situated behind the external connection 59 (anode connection). Because the soft rubber disc 55 expands laterally in reaction to temperature and pressure increases, a leakproof passage for the internal connections 19 is ensured in all circumstances.

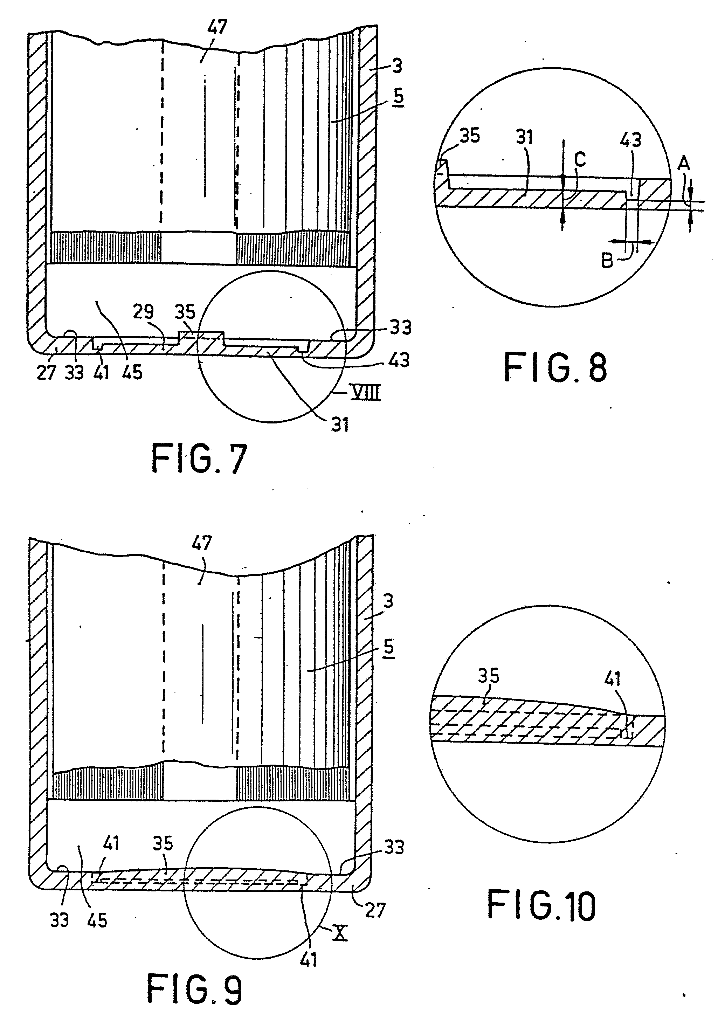

For the purpose of illustration it can be stated that the gas pressure in a test sample of a capacitor as shown in Figure 6 at which the lid 13 was explosively pressed out of the housing 3 amounted to approximately 1379 kN per $m^2$, whilst in a similar test sample the gas pressure at which the weakened portions 29 and 31 were activated as a safety valve amounted to approximately 1172 kN per $m^2$. The dimensions of further test samples as indicated in Figure 8 were as follows:

A=0.127 mm
B=0.317 mm
C=0.254 mm.

Finally, reference is made to the Figures 9 and 10 which show an alternative embodiment of a capacitor as shown in Figure 5. For the sake of simplicity, a partial longitudinal sectional view of the capacitor through a plane in the longitudinal direction of the ridge 35 is shown. The ridge 35 is arcuated, thus imparting additional rigidity to the bottom 27. The weakened portions 29 and 31 which are not visible in the Figures 9 and 10 (see the Figures 7 and 8) have a wall thickness which gradually decreases from the ridge 35 towards the troughs 41 and 43 (only the trough 41 is visible in the Figures 9 and 10), so that they also have an arcuated shape.

The explosionproof capacitor described in the foregoing may be of a different type. The capacitor may be a so-called electrolytic capacitor comprising wound, folded or stacked foils. Similarly, the capacitor may also be of a non-electrolytic type, for example, a wound capacitor comprising polypropylene foil as the dielectric. In the case of an a.c. load, the polypropylene foil is decomposed, so that an inadmissibly high gas pressure is liable to occur. The invention in general relates to all capacitors in which there is a risk of inadmissible development of gas. This gas may originate from dielectric foil, envelopes, separator foils, impregnating liquids, electrolytes, or filling agents. Finally, it is to be noted that even though the invention preferably relates to a capacitor comprising an aluminium housing, it is by no means restricted thereto. Metals other than aluminium and synthetic materials such as phenolic resin can also be used as materials for the capacitor housing.

## Claims

1. A capacitor, comprising a capacitor element which is accommodated in a can-shaped housing which is closed by a lid, the bottom of the can-shaped housing comprising a weakened portion in the form of two identical zones having a wall thickness which is smaller than the wall thickness of the part of the bottom which surrounds these two zones, characterized in that the two zones are separated by a ridge having a wall thickness which is larger than the wall thickness of the two zones.

2. A capacitor as claimed in Claim 1, characterized in that the ridge and the said two zones together cover a circular area, the ridge extending according to a diameter of the circular area.

3. A capacitor as claimed in Claim 1 or 2, characterized in that the two zones are bounded at their circumference by troughs, whose bottom has a wall thickness which is smaller than the wall thickness of the two zones.

## Patentansprüche

1. Kondensator mit einem Kondensatorelement in einem büchsenförmigen Gehäuse, das mit einem Deckel verschlossen ist, wobei der Boden des büchsenförmigen Gehäuses einen geschwächten Teil in Form zweier identischer Zonen besitzt, deren Wandstärke geringer also die Wandstärke des Bodenteils ist, der diese zwei Zonen umgibt, dadurch gekennzeichnet, daß die zwei Zonen durch eine Erhöhung voneinander getrennt sind, deren Wandstärke größer also die Wandstärke der zwei Zonen ist.

2. Kondensator nach Anspruch 1, dadurch gekennzeichnet, daß die Erhöhung und die zwei Zonen miteinander ein kreisförmiges Gebiet einnehmen, wobei sich die Erhöhung über den Durchmesser des kreisförmigen Gebiets erstreckt.

3. Kondensator nach Anspruch 1 oder 2, dadurch gekennzeichnet, daß die zwei Zonen an ihrem Umfang durch Rinnen begrenzt sind, deren Böden eine Wandstärke haben, die geringer also die Wandstärke der zwei Zonen ist.

## Revendications

1. Condensateur comportant un élément de condensateur, qui est diposé dans un boîtier en forme de pot, fermé par un couvercle, le fond du boîtier en forme de pot présentant une partie affaiblie sous forme de deux zones identiques présentant une épaisseur de paroi qui est inférieure à l'épaisseur de paroi de la partie du fond entourant ces deux zones, caractérisé en ce que les deux zones sont séparées par une nervure présentant une épaisseur de paroi qui est supérieure à l'épaisseur de paroi des deux zones.

2. Condensateur selon la revendication 1, caractérisé en ce que la nervure et lesdites deux zones recouvrent ensemble une surface circulaire, la nervure s'étendant suivant un diamètre de la surface circulaire.

3. Condensateur selon la revendication 1 ou 2, caractérisé en ce que les deux zones sont délimitées à leur circonférence par des creux, dont le fond présente une épaisseur de paroi qui est inférieure à l'épaisseur de paroi des deux zones.

FIG.1

FIG.2

FIG.3

0 021 522

FIG.4

FIG.5

FIG.6

2

0 021 522

FIG. 7

FIG. 8

FIG. 9

FIG. 10

3